# EUROPEAN PATENT APPLICATION

(11) **EP 4 723 654 A1**
(43) Date of publication of application: **08.04.2026**
(21) Application number: 24847487.6
(22) Date of filing: 08.01.2024
(51) Int. Cl.: H04N 23/50, H04N 23/68

(54) **ANTI-SHAKE ASSEMBLY OF IMAGE SENSOR, AND CAMERA MODULE**

(30) Priority: 31.07.2023 CN 202310952631
(71) Applicant: Huawei Technologies Co., Ltd., Shenzhen, Guangdong 518129 (CN)
(72) Inventor: SUN, Chenxi, Shenzhen, Guangdong 518129 (CN); KUO, Li-Te, Shenzhen, Guangdong 518129 (CN); HU, Jia, Shenzhen, Guangdong 518129 (CN); FU, Qianyan, Shenzhen, Guangdong 518129 (CN)
(74) Representative: Grünecker Patent- und Rechtsanwälte PartG mbB
(86) International application number: PCT/CN2024/071157
(87) International publication number: WO 2025/025516

(57) **Abstract**

This application provides an image stabilization assembly of an image sensor, a camera module, and an electronic device. An interconnection line for supplying power to the image sensor is laid inside a first circuit board of the image stabilization assembly. The image sensor may be mounted on a movable platform of the first circuit board. A connection arm is connected between the movable platform and a fastening outer frame of the first circuit board. The connection arm may be disposed in a centrosymmetric manner. An interaction force between a first magnet and a coil in the image stabilization assembly may drive the movable platform to move or rotate, thereby driving the image sensor mounted on the movable platform to translate or rotate. The image stabilization assembly, the camera module, and the electronic device provided in this application have strong image stabilization performance, especially rotation image stabilization performance, the image stabilization assembly and the camera module have small sizes, and internal space utilization is high.

## Description

This application claims priority to Chinese Patent Application No. 202310952631.2, filed with the China National Intellectual Property Administration on July 31, 2023 and entitled "IMAGE STABILIZATION ASSEMBLY OF IMAGE SENSOR AND CAMERA MODULE", which is incorporated herein by reference in its entirety.

### TECHNICAL FIELD

This application relates to the field of terminal device hardware, and specifically, to an image stabilization assembly of an image sensor and a camera module.

### BACKGROUND

Optical image stabilization of an image sensor is an important factor that affects photographing and image shooting quality of an electronic device. To improve photographing and image shooting performance of the electronic device, more components such as a lens and a sensor are assembled inside the electronic device, and space that can be used to accommodate an image stabilization functional assembly inside the electronic device is increasingly small.

How to implement a multi-axis image stabilization function of an image sensor in limited space is a problem that is worthy of consideration.

### SUMMARY

This application provides an image stabilization assembly of an image sensor. The image sensor may be mounted on a movable platform of a first circuit board, and an interconnection line is laid inside the first circuit board in the image stabilization assembly, so that power can be supplied to the image sensor. A connection arm disposed in a centrosymmetric manner on the first circuit board may control the movable platform to move or rotate, so that the image sensor can be driven to translate or rotate within limited space, thereby implementing a multi-axis image stabilization function of the image sensor.

According to a first aspect, an image stabilization assembly of an image sensor is provided, including a housing, a first magnet, a coil, and a first circuit board. The first magnet, the coil, and the first circuit board are accommodated in the housing; the first circuit board includes an outer frame, a connection arm, a movable platform, and an interconnection line; the outer frame includes a first interface, and the first interface is configured to connect to an external power supply of the image stabilization assembly; a gap is provided between the movable platform and the outer frame, and the movable platform is configured to load the image sensor; the connection arm is located in the gap, the connection arm connects the outer frame and the movable platform, there are a plurality of connection arms, and the plurality of connection arms are centrosymmetric with respect to a rotation center of the first circuit board; the interconnection line is located inside the first circuit board, and the interconnection line connects the first interface and the image sensor; and the first magnet or the coil is fixedly connected to the movable platform, and when a current is applied to the coil, the first magnet or the coil drives the movable platform to translate or rotate.

In a possible implementation, a first opening is provided in a middle region of the movable platform, and the first opening is used to accommodate the image sensor.

In a possible implementation, the first magnet is fixedly connected to the movable platform, and the coil is fixedly connected to the housing. Alternatively, the coil is fixedly connected to the movable platform, and the first magnet is fixedly connected to the housing.

It should be understood that the fixed connection herein may include a direct connection and an indirect connection. For example, that the first magnet is fixedly connected to the movable platform may mean that the first magnet is fastened to the movable platform, or may mean that the first magnet is fastened to a second circuit board, and the second circuit board is fixedly connected to the movable platform.

In a possible implementation, the image stabilization assembly further includes a controller, and the controller is configured to control a direction and a magnitude of a current in the coil.

In a possible implementation, the connection arm or the first circuit board may be made of a material whose elastic modulus is greater than a preset threshold, the connection arm may also be referred to as an elastic connection arm, and the first circuit board may also be referred to as an elastic circuit board.

In this technical solution, the interconnection line is laid inside the first circuit board to supply power to the image sensor. This helps improve space utilization of the image stabilization assembly, and helps reduce adverse impact of a power supply line on a rotation image stabilization function of the image stabilization assembly. In addition, a centrosymmetric connection arm is disposed to control the image sensor to translate or rotate. This helps make displacement or a rotation angle of the image sensor more stable, simplify a structure of the image stabilization assembly, and improve reliability and stability of the rotation image stabilization function of the image stabilization assembly. Compared with a solution in which a flexible circuit board is used to implement the rotation image stabilization function, in this technical solution, the first circuit board has smaller rigidity and better rotation image stabilization performance.

With reference to the first aspect, in some implementations of the first aspect, a first end of the connection arm is connected to the outer frame, a second end of the connection arm is connected to the movable platform, and an included angle formed between a connection line from the first end to the rotation center and a connection line from the second end to the rotation center is greater than or equal to 90°.

It should be understood that the included angle formed between the two connection lines is an included angle between a direction in which the rotation center points to the first end and a direction in which the rotation center points to the second end.

In some scenarios, this technical solution may also be understood as follows: A plane on which the first circuit board is located is divided into four quadrants by using two straight lines that are perpendicular to each other and that pass through the rotation center of the first circuit board, and the connection arm passes through at least two of the four quadrants.

Under a same acting force, total deformation of a connection arm that meets a length or a shape in this technical solution is larger, and it is more likely to drive a movable platform connected to the connection arm to rotate or translate. In other words, efficiency of driving the image sensor by the connection arm is higher. This helps improve energy utilization of the image stabilization assembly.

With reference to the first aspect, in some implementations of the first aspect, there are a plurality of connection arms, the plurality of connection arms include a first connection arm and a second connection arm, and both the first connection arm and the second connection arm are configured to connect a first connection portion of the outer frame and a second connection portion of the movable platform.

In a possible implementation, the plurality of connection arms are located on a plane on which the first circuit board is located, and a gap is provided between two adjacent connection arms.

The plurality of connection arms are used to jointly control the movable platform, so that a force direction at the connection portion of the movable platform is not prone to deviation, and the connection arm controls the movable platform more stably. In addition, when any one of the plurality of connection arms is damaged, the remaining connection arms can still continue to control the movable platform, and reliability of image stabilization performance of the image stabilization assembly is higher.

With reference to the first aspect, in some implementations of the first aspect, a connection rod is connected between the first connection arm and the second connection arm.

In a possible implementation, the first connection arm and the connection rod are connected at a position at which a force direction suddenly changes on the first connection arm. The second connection arm and the connection rod are connected at a position at which a force direction suddenly changes on the second connection arm.

The connection rod is disposed between the two connection arms, so that a deformation difference between the two connection arms when the two connection arms deform due to a force is smaller, control effects of the two connection arms on the movable platform are more synchronous, and image stabilization performance of the image stabilization assembly is more stable.

With reference to the first aspect, in some implementations of the first aspect, the connection rod includes a conductive portion, and the conductive portion is used for conduction between a first interconnection line located inside the first connection arm and a second interconnection line located inside the second connection arm.

In a possible implementation, the connection rod is a conductor, for example, a metal. In this case, the connection rod may also be referred to as a metal flexural body.

The connection rod connecting the first connection arm and the second connection arm is used to connect the interconnection lines inside the two connection arms. There are more optional cabling manners for the interconnection line inside the first circuit board. This helps reduce cabling complexity of the interconnection line inside the first circuit board.

With reference to the first aspect, in some implementations of the first aspect, there are a plurality of interconnection lines, and the plurality of interconnection lines are located at different positions in a thickness direction of the first circuit board.

In a possible implementation, the plurality of interconnection lines are distributed in a stacked manner in the thickness direction of the first circuit board, and the plurality of interconnection lines are insulated from each other.

In a possible implementation, the plurality of interconnection lines are further configured to supply power to another electronic element in the image stabilization assembly, for example, a Hall element or a controller.

The plurality of interconnection lines are disposed in the thickness direction of the first circuit board, and the plurality of interconnection lines can be used to supply power to more electronic elements. In this technical solution, space inside the first circuit board is further utilized. This helps further improve space utilization of the image stabilization assembly.

With reference to the first aspect, in some implementations of the first aspect, the connection arm includes a plurality of sub-connection arms, and an included angle formed between two adjacent sub-connection arms in the plurality of sub-connection arms is equal to 90°.

In a possible implementation, the connection arm includes two sub-connection arms that are perpendicular to each other.

The connection arm includes sub-connection arms in two directions that are perpendicular to each other. When the connection arm is subject to an acting force, the acting force may be effectively decomposed in the directions of the sub-connection arms, and deformation and/or displacement that can occur on the connection arm is larger. The image stabilization assembly converts electric energy into mechanical energy with higher conversion efficiency, and the image stabilization assembly has higher energy utilization.

With reference to the first aspect, in some implementations of the first aspect, the image stabilization assembly further includes a bottom plate and a support plate, the bottom plate is located on a side that is of the first circuit board and that is away from a cover plate of the housing, the support plate is located between the first circuit board and the bottom plate, and the support plate is in contact with the bottom plate.

In a possible implementation, the support plate is in rolling friction contact or sliding friction contact with the bottom plate.

In a possible implementation, a lubricating material is filled between the support plate and the bottom plate. Alternatively, a lubricating material is coated on a side that is of the support plate and that is in contact with the bottom plate.

The support plate is disposed between the first circuit board and the bottom plate, and friction is performed between the support plate and the bottom plate. This helps avoid direct contact between the image sensor mounted on the first circuit board and the bottom plate, and helps reduce wear of the image sensor.

With reference to the first aspect, in some implementations of the first aspect, the movable platform includes a first opening, the support plate includes a second opening, the first opening is in communication with the second opening, and the first opening and the second opening are used to accommodate the image sensor.

In a possible implementation, the image sensor may be clamped in the first opening and the second opening. When the movable platform drives the image sensor to translate or rotate, the graphic sensor may drive the support plate to translate or rotate relative to the bottom plate.

A surface that is of the image sensor accommodated in the first opening and the second opening and that faces the bottom plate may be in a suspended state, that is, is not in contact with the bottom plate, the support plate, or the like. This helps improve a driving effect of the image stabilization assembly for the image sensor, reduce wear of the image sensor, and prolong a service life of the image stabilization assembly.

With reference to the first aspect, in some implementations of the first aspect, a pad is disposed on a surface that is of the support plate and that faces the bottom plate, and the pad is in contact with the bottom plate.

In a possible implementation, the pad is in rolling friction contact or sliding friction contact with the bottom plate.

The pad is disposed on the surface that is of the support plate and that faces the bottom plate. This helps control a contact area between the support plate and the bottom plate in a translation or rotation process, helps reduce wear of the support plate, helps better drive the image sensor to translate or rotate, and helps improve stability of contact between the support plate and the bottom plate to some extent.

With reference to the first aspect, in some implementations of the first aspect, the image stabilization assembly further includes a second magnet, the bottom plate is made of a magnetic material, the second magnet is located above the movable platform, and the second magnet and the bottom plate attract each other.

An attractive force between the second magnet and the bottom plate can effectively press-fit the support plate onto the bottom plate. This helps reduce a probability that the support plate shakes in an optical axis direction, and helps improve reliability and stability of image stabilization performance of the image stabilization assembly.

With reference to the first aspect, in some implementations of the first aspect, the image stabilization assembly further includes a support frame, the support frame is located between the bottom plate and the first circuit board, the support frame is located on an outer side of the support plate, and a thickness of the support frame is the same as a height of the support plate.

When the support plate is not provided with the pad, a thickness of the support frame is the same as a thickness of the support plate. When the support plate is provided with the pad, a thickness of the support frame is the same as a sum of a height of the pad and a thickness of the support plate.

An outer circumferential region between the bottom plate and the first circuit board may be filled with the support frame, the bottom plate and the first circuit board can be more closely attached, it is difficult for dust outside the image stabilization assembly to enter between the bottom plate and the first circuit board, and a friction status between the bottom plate and the support plate is not easily interfered by a substance such as dust. This technical solution helps improve reliability of a function of the image stabilization assembly.

With reference to the first aspect, in some implementations of the first aspect, the support frame avoids the connection arm.

When the support frame avoids the connection arm, deformation or displacement of the connection arm is not adversely affected by friction between the connection arm and the support frame. In this technical solution, efficiency of driving the movable platform by an interaction force between the coil and the first magnet is higher, and energy conversion efficiency of the image stabilization assembly is higher.

With reference to the first aspect, in some implementations of the first aspect, the coil includes a first sub-coil and a second sub-coil, the first sub-coil is configured to drive the movable platform to translate in a first direction, the second sub-coil is configured to drive the movable platform to translate in a second direction, and the first direction is perpendicular to the second direction.

With reference to the first aspect, in some implementations of the first aspect, the coil includes a third sub-coil, and the third sub-coil is configured to drive the movable platform to rotate around the rotation center of the first circuit board.

In a possible implementation, the third sub-coil and the first sub-coil are a same coil, or the third sub-coil and the second sub-coil are a same coil.

Different coils may be configured to provide acting forces for driving the movable platform to translate or rotate in different directions. Control logic of an image stabilization function of the image stabilization assembly is simpler. This helps reduce mutual interference between different coils in the image stabilization assembly, and helps improve stability of image stabilization performance of the image stabilization assembly.

With reference to the first aspect, in some implementations of the first aspect, the first magnet is a Halbach magnet.

Compared with a single magnet, the Halbach magnet enhances magnetic field intensity in a specific range. Using the Halbach magnet can enhance the interaction force between the first magnet and the coil to some extent. In other words, using the Halbach magnet can enhance the driving force for the image sensor to some extent. In other words, compared with the single magnet, when the Halbach magnet is used, a smaller current or a smaller-sized coil can achieve an equivalent driving force. Implementation of this technical solution helps improve energy conversion efficiency of the image stabilization assembly, and helps improve space utilization in the image stabilization assembly.

With reference to the first aspect, in some implementations of the first aspect, the image stabilization assembly further includes a fastening plate, the fastening plate is fixedly connected to the movable platform, and the first magnet or the coil is fastened to the fastening plate.

In a possible implementation, the fastening plate may be further configured to fasten another electronic element such as a Hall element or a controller.

In a possible implementation, the fastening plate is electrically connected to the first circuit board. For example, the fastening plate is electrically connected to the first circuit board through tin soldering.

The fastening plate is disposed to load the first magnet or the coil. This helps uniformly mount and dispose a plurality of electronic elements in the image stabilization assembly, and supplying power to the fastening plate can implement power supply to the electronic elements on the fastening plate. Implementation of this technical solution helps improve mounting and production efficiency of the image stabilization assembly.

For detailed descriptions of related explanations and beneficial effects in the following technical solutions, refer to related content in the first aspect. For brevity, details are not described below.

According to a second aspect, a circuit board is provided, including an outer frame, a connection arm, a movable platform, and an interconnection line. A first interface is disposed on the outer frame, and the first interface is configured to connect to an external power supply of an image stabilization assembly; a gap is provided between the movable platform and the outer frame, and the movable platform is configured to load an image sensor; the connection arm is located in the gap, the connection arm connects the outer frame and the movable platform, there are a plurality of connection arms, and the plurality of connection arms are centrosymmetric with respect to a rotation center of the circuit board; and the interconnection line is located inside the circuit board, and the interconnection line connects the first interface and the image sensor.

With reference to the second aspect, in some implementations of the second aspect, a first end of the connection arm is connected to the outer frame, a second end of the connection arm is connected to the movable platform, and an included angle formed between a connection line from the first end to the rotation center and a connection line from the second end to the rotation center is greater than or equal to 90°.

With reference to the second aspect, in some implementations of the second aspect, there are a plurality of connection arms, the plurality of connection arms include a first connection arm and a second connection arm, and both the first connection arm and the second connection arm are configured to connect a first connection portion of the outer frame and a second connection portion of the movable platform.

With reference to the second aspect, in some implementations of the second aspect, the first connection arm and the second connection arm are connected by using a connection rod.

With reference to the second aspect, in some implementations of the second aspect, the connection rod includes a conductive portion, and the conductive portion is used for conduction between a first interconnection line located inside the first connection arm and a second interconnection line located inside the second connection arm.

With reference to the second aspect, in some implementations of the second aspect, there are a plurality of interconnection lines, and the plurality of interconnection lines are located at different positions in a thickness direction of the circuit board.

With reference to the second aspect, in some implementations of the second aspect, the connection arm includes a plurality of sub-connection arms, and an included angle formed between two adjacent sub-connection arms in the plurality of sub-connection arms is equal to 90°.

In a possible implementation, the connection arm includes two sub-connection arms.

According to a third aspect, a camera module is provided, including a lens, an image sensor, and the image stabilization assembly of the image sensor according to the first aspect and any possible implementation of the first aspect. The image sensor is mounted in a middle region of the image stabilization assembly, the lens and the image stabilization assembly are relatively fastened, and an imaging light ray is incident to the image sensor through the lens.

According to a fourth aspect, an electronic device is provided, including a mainboard and the camera module according to the third aspect and the possible implementations of the third aspect. The camera module is electrically connected to the mainboard.

### BRIEF DESCRIPTION OF DRAWINGS

FIG. 1 is a diagram of an electronic device according to an embodiment of this application;
FIG. 2 is a diagram of a camera module of an electronic device according to an embodiment of this application;
FIG. 3 is a three-dimensional view of an image stabilization module of an image sensor according to an embodiment of this application;
FIG. 4 is an exploded view of the image stabilization module of the image sensor shown in FIG. 3 according to an embodiment of this application;
FIG. 5 is a diagram of a manner of disposing a first magnet according to an embodiment of this application;
FIG. 6 is a diagram of a structure of a first magnet according to an embodiment of this application;
FIG. 7 is a diagram of a structure of another first magnet according to an embodiment of this application;
FIG. 8 is a diagram of a manner of disposing a coil according to an embodiment of this application;
FIG. 9 is a diagram of force analysis of the coil shown in FIG. 8;
FIG. 10 is a three-dimensional view of a first circuit board according to an embodiment of this application;
FIG. 11 is a diagram of a fastening outer frame of a first circuit board according to an embodiment of this application;
FIG. 12 is a diagram of a manner of disposing a connection arm of a first circuit board according to an embodiment of this application;
FIG. 13 is a diagram of a connection arm of a first circuit board according to an embodiment of this application;
FIG. 14 is a diagram of a shape of a connection arm of a first circuit board according to an embodiment of this application;
FIG. 15 is a diagram of a movable platform of a first circuit board according to an embodiment of this application;
FIG. 16 is a diagram of an AA cross section of a first circuit board according to an embodiment of this application;
FIG. 17 is a diagram of a support plate of a first circuit board according to an embodiment of this application;
FIG. 18 is a diagram of a support frame of a first circuit board according to an embodiment of this application; and
FIG. 19 is a diagram of a second circuit board according to an embodiment of this application.

### DESCRIPTION OF EMBODIMENTS

The following describes embodiments of this application in detail. Examples of embodiments of this application are shown in the accompanying drawings. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

Unless otherwise defined, a technical term or a scientific term used herein shall have a general meaning understood by a person of ordinary skill in the technical field of this application. In the description of the present disclosure, it should be understood that orientation or position relationships indicated by the terms such as "center", "longitudinal", "transverse", "above", "below", "front", "back", "left", "right", "vertical", "horizontal", "top", "bottom", "inside", and "outside" are based on orientation or position relationships shown in the accompanying drawings, and are merely used for ease and brevity of description of the present disclosure, rather than indicating or implying that the indicated apparatus or element needs to have a particular orientation or needs to be constructed and operated in a particular orientation. Therefore, such terms should not be construed as a limitation on the present disclosure.

The terms used in the following embodiments are merely used for describing specific embodiments, and are not intended to limit this application. The terms "first", "second", and the like are merely used for description, but should not be understood as indicating or implying relative importance or implying a quantity of indicated technical features. Therefore, a feature limited by "first", "second", or the like may explicitly or implicitly include one or more features. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. The terms "include", "contain", "have", and variations thereof all mean "including but not limited to", unless otherwise specifically emphasized in another manner.

Before embodiments of this application are described, some terms that may be used in the following content are first explained.

A voice coil motor (voice coil motor, VCM), also referred to as a voice coil direct current motor, is named because a structure thereof is similar to a voice coil of a horn, and features a high frequency response and high precision.

Image sensor image stabilization (sensor optical image stabilization, SOIS) drives an image sensor to move to compensate for a shake of an operator in a use process, thereby improving image stability.

Mobile power supply means that during image stabilization of an image sensor, a power supply problem of the image sensor in a movement process needs to be resolved. Usually, a conventional wire, a flexible printed circuit (flexible printed circuit, FPC), a printed circuit board (printed circuit board, PCB), a trace on a reed, and the like are selected to meet an electrical performance requirement of the sensor.

Optical image stabilization (optical image stabilization, OIS) means that in a camera or another similar imaging instrument, an optical element is disposed to avoid or reduce an instrument shake phenomenon that occurs in a process of capturing an optical signal, thereby improving imaging quality.

A Halbach (Halbach) magnet, or referred to as a Halbach array (Halbach array), is a special permanent magnet array, which can enhance a magnetic field on one side of the array and weaken a magnetic field on another side of the array to nearly zero.

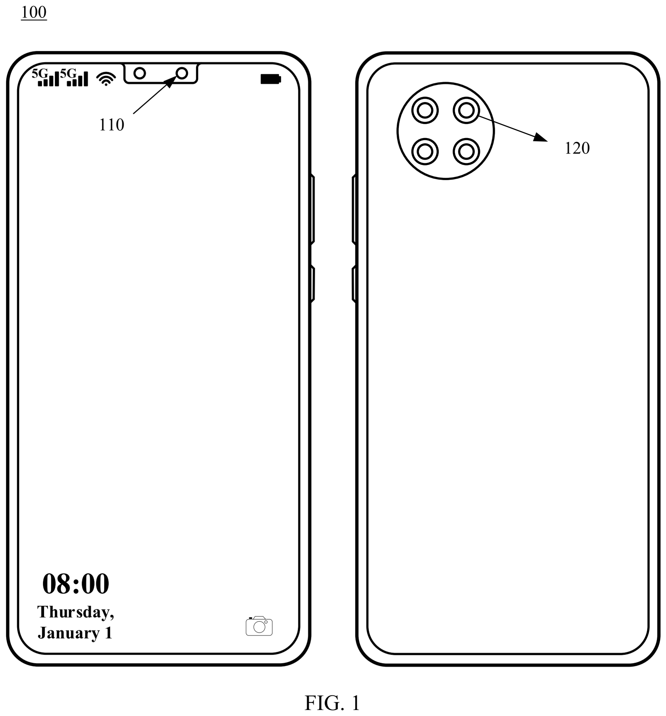

FIG. 1 shows an electronic device 100 according to an embodiment of this application. The electronic device 100 may include a front-facing camera module 110 and/or a rear-facing camera module 120.

When a user uses the electronic device 100 to perform an image shooting operation, one or more of rotation around an optical axis direction, deflection in the optical axis direction, and translation in a plane perpendicular to an optical axis may occur on the front-facing camera module 110 and/or the rear-facing camera module 120.

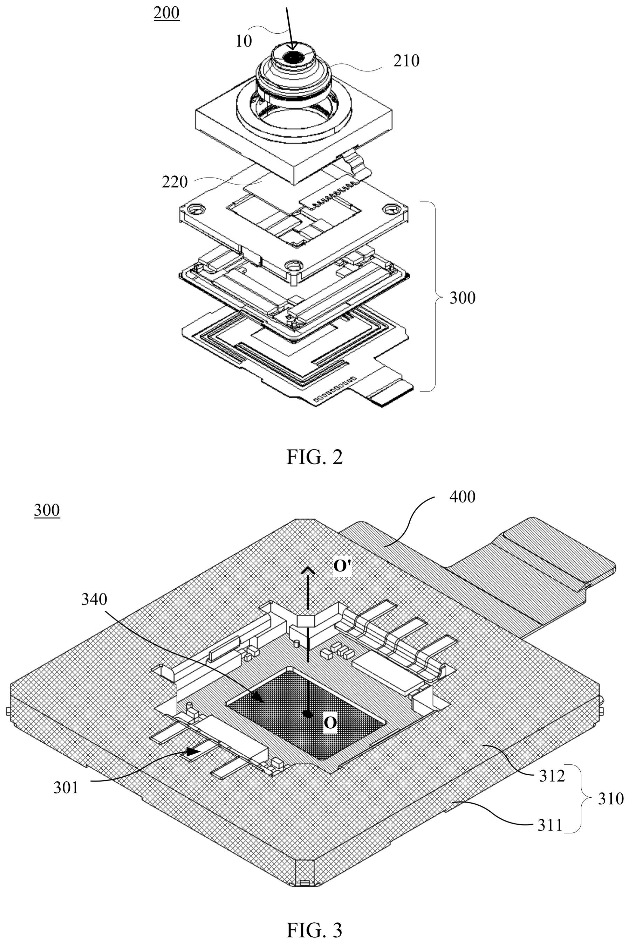

FIG. 2 is a diagram of an example of composition of a camera module 200 of the electronic device 100. The camera module 200 may be the foregoing front-facing camera module 110, or may be the foregoing rear-facing camera module 120.

The camera module 200 may include a lens 210, an image sensor 220, an image stabilization assembly 300 of the image sensor, and an image processing chip (not shown in the figure). When the camera module 200 is used for image shooting, an incident light ray 10 is incident to the lens 210 by a photographed object, and the incident light ray 10 may be incident to the image sensor 220 through modulation by the lens 210. The image sensor 220 may be a complementary metal oxide semiconductor (complementary metal oxide semiconductor, CMOS) device or a charge coupled device (charge coupled device, CCD). The image sensor 220 may convert an incident optical signal into an electrical signal. An image signal processor (image signal processor, ISP) in the camera module 200 may convert the electrical signal output by the image sensor 220 into a digital image signal and output the digital image signal to a digital signal processor (digital signal processor, DSP). The digital signal processor may convert an input signal into an image signal in a standard format (for example, a red green blue (red green blue, RGB) format). The image stabilization assembly 300 of the image sensor may be configured to load the image sensor 220, and supply power to and provide a data transmission channel for the image sensor 220.

In some examples, the camera module 200 may further include one or more of other components such as a voice coil motor (VCM), an optical filter, and a fastener. The voice coil motor may be configured to implement an automatic focusing function of the camera module, to improve definition of an image captured by the camera module 200. The optical filter can improve, to some extent, quality of an image captured by a camera, for example, improve contrast and saturation of the image by filtering out an undesired light ray. The fastener may be configured to fasten the lens 210.

As described above, it is difficult for the electronic device 100 to keep completely relative static with the photographed object in an image shooting process. When the photographed object and the electronic device move relative to each other, a position of an incidence point for incidence from the lens 210 to the image sensor 220 may change. Such a change adversely affects, to some extent, quality of an image captured by the camera module 200. To improve imaging quality of the camera module 200, it is necessary to improve image stabilization performance of the image sensor 220.

To improve image stabilization performance of the image sensor, this application provides an image stabilization assembly 300 of the image sensor. The image stabilization assembly 300 may be configured to implement a multi-axis image stabilization function of the image sensor, to reduce adverse impact of translation, deflection, and rotation of the image sensor on imaging quality of the camera module of the electronic device 100, and improve imaging quality of the camera module. The following provides further descriptions.

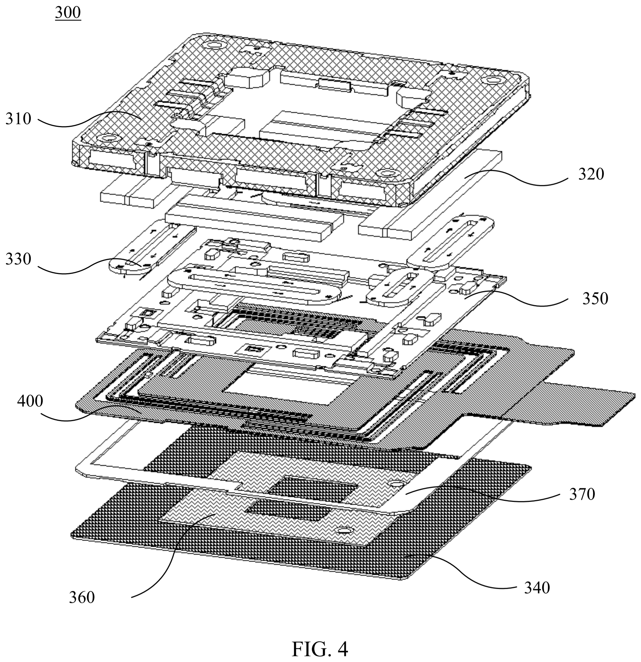

FIG. 3 and FIG. 4 show an image stabilization assembly 300 of an image sensor according to an embodiment of this application. FIG. 3 is a three-dimensional view of the image stabilization assembly 300. FIG. 4 is a diagram of a component combination of the image stabilization assembly 300. The image stabilization assembly 300 may include a housing 310, a first magnet 320, a coil 330, a first circuit board 400, and a bottom plate 340.

The housing 310 may include a side wall 311 and a cover plate 312. The side wall 311 may be formed by extending from a position for connection to the cover plate 312 toward a direction away from the cover plate 312 by a specific distance. For example, the side wall 311 may be formed by extending in a normal direction (a direction of OO' in FIG. 3) of a plane on which the cover plate 312 is located toward the direction away from the cover plate 312 by a specific distance. That is, a plane on which the side wall 311 is located is perpendicular to the plane on which the cover plate 312 is located.

In some examples, an opening may be provided in a middle region of the cover plate 312, and a position of the opening may be used to accommodate a device such as the image sensor 220 and an optical module (for example, the lens 210) that cooperates with the image stabilization assembly 300.

When the housing 310 covers the bottom plate 340, accommodating space may be formed between the housing 310 and the bottom plate 340. The accommodating space may be used to accommodate another device or component of the image stabilization assembly 300, for example, the first magnet 320, the coil 330, and the first circuit board 400 described above. Some or all components or devices in the accommodating space may be exposed at the position of the opening of the cover plate 312. In some examples, a connection portion 301 of a device A may extend out of the accommodating space from the position of the opening, and the connection portion 301 may be configured to implement an electrical connection to an element outside the image stabilization assembly 300.

When the housing 310 covers the bottom plate 340, an end that is of the side wall 311 and that is away from the cover plate 312 may be in contact with the bottom plate 340. In some examples, the housing 310 and the bottom plate 340 may be fixedly connected through one or more of glue, a snap-fit, a screw, and the like.

The first magnet 320 and the coil 330 may be disposed opposite to each other, and an interaction force may be generated between the first magnet 320 and the coil 330.

In some examples, the first magnet 320 is fixedly connected to the housing 310, and the coil 330 is fixedly connected to the first circuit board 400. When an interaction force is generated between the first magnet 320 and the coil 330, the interaction force may drive the coil 330 to drive the first circuit board 400 to deform and/or move.

For example, in a case that the coil 330 is fixedly connected to the first circuit board 400, and when the first magnet 320 interacts with the coil 330, the coil 330, as a research object, may be subject to at least two acting forces with perpendicular directions on a same plane, so that the image sensor 220 in the image stabilization assembly 300 can be subject to driving forces in two perpendicular directions on the same plane, and then can translate or rotate on the plane.

In some examples, the coil 330 is fixedly connected to the housing 310, and the first magnet 320 is fixedly connected to the first circuit board 400. When an interaction force is generated between the first magnet 320 and the coil 330, the interaction force may drive the first magnet 320 to drive the first circuit board 400 to deform and/or move.

For example, in a case that the first magnet 320 is fixedly connected to the first circuit board 400, using the first magnet 320 as a research object, when the first magnet 320 interacts with the coil 330, the first magnet 320 may be subject to at least two acting forces with perpendicular directions on a same plane, so that the image sensor 220 in the image stabilization assembly 300 can be subject to driving forces in two perpendicular directions on the same plane, and then can translate or rotate on the plane.

When the first magnet 320 is fixedly connected to the housing 310, one or more fasteners may be disposed on the side wall 311 or the cover plate 312, and the one or more fasteners may be configured to fasten the first magnet 320 to the housing 310.

For example, the one or more fasteners may be of a groove structure, and a shape of the fastener may match a shape of the first magnet 320. The first magnet 320 may be mounted in the groove structure, and the housing 310 is fixedly connected to the first magnet 320 by using a friction force between a side wall of the groove structure and the first magnet 320.

For example, an adhesive material may be attached to a surface of the first magnet 320, and the first magnet 320 may be fixedly connected, by using the adhesive material, to a surface that is of the cover plate 312 and that faces the bottom plate 340, or the first magnet 320 may be fixedly connected, by using the adhesive material, to a surface that is of the side wall 311 and that faces the accommodating space.

When the first magnet 320 is fixedly connected to the housing 310, one or more fasteners may be disposed on the side wall 311 or the cover plate 312, and the one or more fasteners may be configured to fasten the coil 330 to the housing 310.

For example, the one or more fasteners may be of a groove structure or an annular structure, and a shape of the fastener may match a shape of the coil 330. The coil 330 may be mounted in the groove structure or the annular structure, and the coil 330 is fixedly connected to the housing 310 by using a friction force between a side wall of the groove structure or the annular structure and the first magnet 320.

For example, an adhesive material may be attached to a surface of the coil 330, and the coil 330 may be fixedly connected, by using the adhesive material, to a surface that is of the cover plate 312 and that faces the bottom plate 340, or the coil 330 may be fixedly connected, by using the adhesive material, to a surface that is of the side wall 311 and that faces the accommodating space.

The foregoing merely provides examples of some manners in which the first magnet 320 or the coil 330 is connected to the housing 310. It should be understood that the first magnet 320 or the coil 330 may be connected to the housing 310 in more manners. This is not limited in this application.

In the first magnet 320 and the coil 330, one component (for example, referred to as a first component) may be fixedly connected to the housing 310, and the other component (for example, referred to as a second component) may be disposed opposite to the first component. In addition, the first component and the second component may interact with each other by using a magnetic force, and the interaction caused by the magnetic force may drive the image sensor to move or rotate.

In the following embodiments, an example in which the first magnet 320 is fixedly connected to the housing 310 and the coil 330 is fixedly connected to the first circuit board 400 is used for description. In some examples, the first magnet 320 may be alternatively fixedly connected to the first circuit board 400, and the coil 330 may be alternatively fixedly connected to the housing 310. In other words, the first magnet 320 and the coil 330 may be relatively fastened, provided that an interaction force can be generated between the first magnet 320 and the coil 330 when a current is applied to the coil 330.

The coil 330 needs to be electrically connected, and the image stabilization assembly 300 provided in this application may use the first circuit board 400 as a power supply circuit (this part of content is described in detail below). Therefore, the coil 330 may be disposed close to the first circuit board 400, in other words, the coil 330 is fixedly connected to the first circuit board 400, to help simplify cabling inside the image stabilization assembly 300 and improve utilization of internal space of the image stabilization assembly 300. When an interconnection line inside the first circuit board 400 is not used as a power supply line of the coil 330, in other words, when a power supply line of the coil 330 does not pass through the first circuit board 400, a quantity of interconnection lines inside the first circuit board 400 is smaller, an elastic modulus of the first circuit board 400 can be larger, and the first circuit board 400 has larger deformation under a same acting force. This better helps the image stabilization assembly 300 drive the image sensor.

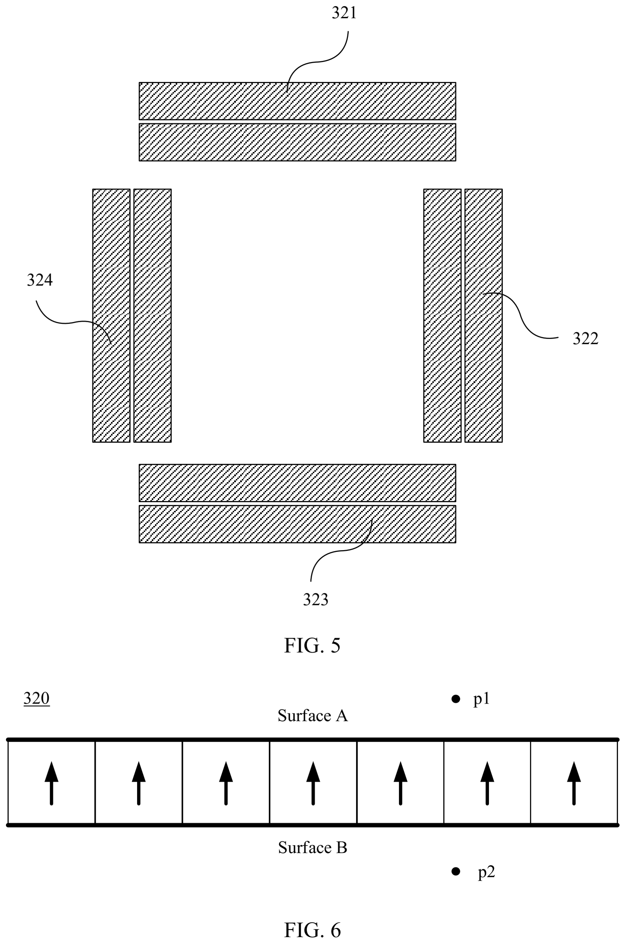

As shown in FIG. 5, the first magnet 320 may include a first sub-magnet 321, a second sub-magnet 322, a third sub-magnet 323, and a fourth sub-magnet 324, and the four sub-magnets may be disposed along an outer frame of the cover plate 312.

For example, the cover plate 312 may be a rectangle or an approximate rectangle. When the first magnet 320 is fixedly connected to the housing 310, the first sub-magnet 321, the second sub-magnet 322, the third sub-magnet 323, and the fourth sub-magnet 324 may be respectively disposed near four outer frames of the cover plate 312. The first sub-magnet 321 and the third sub-magnet 323 are disposed opposite to each other, and the second sub-magnet 322 and the fourth sub-magnet 324 are disposed opposite to each other. The four sub-magnets included in the first magnet 320 may have basically consistent shapes, sizes, and magnetic field intensity distribution that can be generated, thereby helping improve production and assembly efficiency of the image stabilization assembly 300.

In some examples, the first magnet 320 may include only any three of the first sub-magnet 321, the second sub-magnet 322, the third sub-magnet 323, and the fourth sub-magnet 324, for example, the first sub-magnet 321, the second sub-magnet 322, and the third sub-magnet 323.

In some examples, the first magnet 320 may include two sub-magnets that are adjacently disposed in the first sub-magnet 321, the second sub-magnet 322, the third sub-magnet 323, and the fourth sub-magnet 324, for example, the first sub-magnet 321 and the second sub-magnet 322, the third sub-magnet 323 and the fourth sub-magnet 324, or the second sub-magnet 322 and the third sub-magnet 323.

The first magnet 320 may be a single magnet. FIG. 6 is a diagram of an example of a single magnet. The first magnet 320 includes a surface A and a surface B that are disposed opposite to each other. Outside the first magnet 320, a magnetic induction line is emitted from the surface A and enters the inside of the magnet through the surface B. Inside the first magnet 320, a magnetic induction line points from the surface B to the surface A. A direction of an arrow in the figure indicates a direction of a magnetic induction line inside the magnet.

A density of magnetic induction lines of the first magnet 320 on a side of the surface A is equivalent to a density of magnetic induction lines on a side of the surface B, magnetic field intensity at points (for example, a point p1 and a point p2 in FIG. 6) corresponding to the side of the surface A and the side of the surface B is basically equal, and magnetic field intensity distribution on the side of the surface A is similar to magnetic field intensity distribution on the side of the surface B. In this case, an interaction force that can be generated between the first magnet 320 and the coil 330 when the surface A of the first magnet 320 faces the coil 330 is basically consistent with that generated when the surface B of the first magnet 320 faces the coil 330. In other words, in this case, the surface A of the first magnet 320 may face the coil 330, or the surface B of the first magnet 320 may face the coil 330.

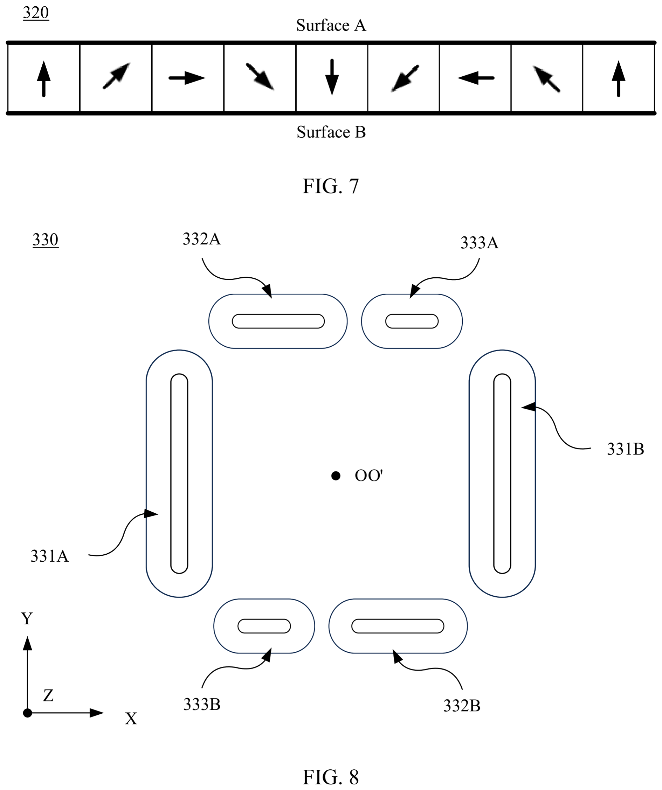

The first magnet 320 may alternatively be a Halbach magnet. FIG. 7 is a diagram of an example of a Halbach magnet. The first magnet 320 includes a surface A and a surface B that are disposed opposite to each other. A direction of an arrow in the figure may indicate a direction of a magnetic induction line inside the first magnet 320.

Directions of magnetic induction lines in different regions inside the first magnet 320 are different. The first magnet 320 shown in FIG. 7 has a relatively high density of magnetic induction lines and relatively high magnetic field intensity on a side of the surface A, and has a relatively low density of magnetic induction lines and relatively low magnetic field intensity on a side of the surface B. According to Ampere's law, for same-length wires and a same current, high magnetic induction intensity indicates a larger force applied to a wire in a coil. In this case, it may be considered that the surface A of the first magnet faces the coil 330, to increase a force applied to the coil.

As described above, using the Halbach magnet can increase, to some extent, an acting force generated between the first magnet 320 and the coil 330. The acting force may be used to drive the image sensor to move or rotate. In other words, compared with the single magnet, the Halbach magnet can increase, to some extent, a driving force of the image stabilization assembly 300 for the image sensor. From another perspective, to achieve a same driving force, using the Halbach magnet requires a smaller drive current and a smaller coil length (or size) than using the single magnet.

It should be noted that FIG. 7 merely provides an example of a structure of a Halbach magnet. The Halbach magnet may alternatively be in another shape such as a ring or a circle. These different forms of Halbach magnets can all be applied to the image stabilization assembly 300. This is not limited in this application.

The coil 330 may be disposed in cooperation with the first magnet 320, so that when the coil 330 is powered on, an interaction force can be generated between the coil 330 and the first magnet 320.

As shown in FIG. 4, when the first magnet 320 is fixedly connected to the housing 310, the coil 330 may be disposed right below the first magnet 320. In other words, the coil 330 and the first magnet 320 may be stacked in a direction of an optical axis OO', the coil 330 is located on a side close to the first circuit board 400, and the first magnet 320 is located on a side close to the cover plate 311 of the housing 310.

In some examples, as shown in FIG. 4 and FIG. 8, the coil 330 may include a first sub-coil 331A, a second sub-coil 332A, a third sub-coil 333A, a fourth sub-coil 331B, a fifth sub-coil 332B, and a sixth sub-coil 333B.

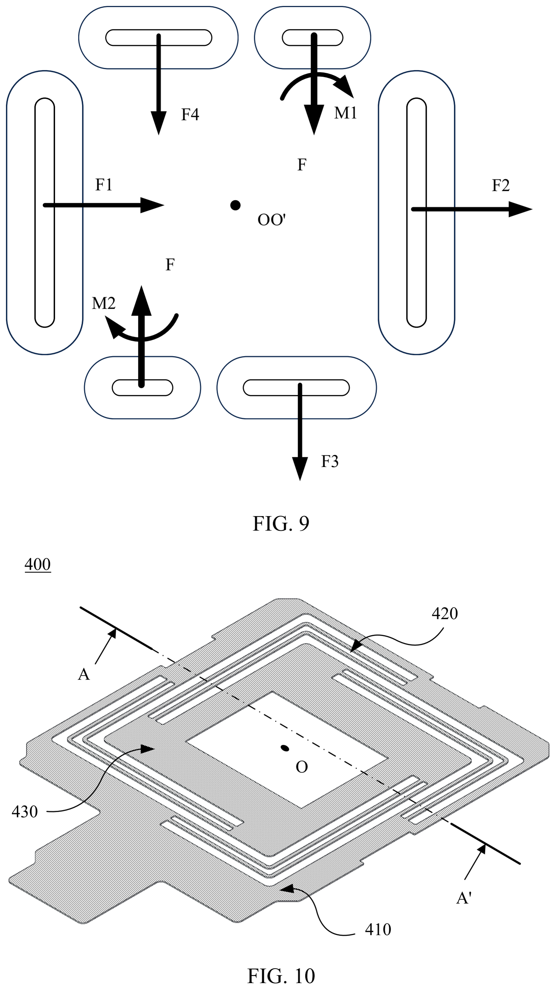

The first sub-coil 331A and the fourth sub-coil 331B may be considered as a first sub-coil group. The first sub-coil group may interact with the first magnet 320 that is disposed opposite to the first sub-coil group, so that a force in a positive direction of an X-axis or a negative direction of the X-axis in FIG. 9 can be generated. The second sub-coil 332A and the fifth sub-coil 332B may be considered as a second sub-coil group. The second sub-coil group may interact with the first magnet 320 that is disposed opposite to the second sub-coil group, so that the second sub-coil group can be used to generate a force in a positive direction of a Y-axis or a negative direction of the Y-axis in FIG. 9. Similarly, the third sub-coil 333A and the sixth sub-coil 333B may be considered as a third sub-coil group, and the third sub-coil group can be used to generate a force in the positive direction of the Y-axis or the negative direction of the Y-axis in FIG. 9.

With reference to FIG. 8 and FIG. 9, in some examples, both acting forces F1 and F2 applied to the first sub-coil group pass through the optical axis OO'. To be specific, lengths of force arms of F1 and F2 that act on the optical axis are zero, and F1 and F2 cannot generate torque that enables the first sub-coil group to rotate.

In some examples, acting forces F3 and F4 applied to the second sub-coil group each do not pass through the optical axis OO', and F3 and F4 can generate torque that enables the second sub-coil group to rotate around the optical axis OO'. For example, shapes of the second sub-coil 332A and the fifth sub-coil 332B and magnitudes of currents passing through the second sub-coil 332A and the fifth sub-coil 332B are controlled, so that torque acting on the second sub-coil 332A and torque acting on the fifth sub-coil 332B have an equal magnitude and a same direction, and combined torque of the second sub-coil group can drive the first circuit board 400 fixedly connected to the second sub-coil group to rotate.

In some examples, no acting force applied to the third sub-coil group passes through the optical axis OO', and an acting force applied to the third sub-coil group can generate torque that enables the third sub-coil group to rotate around the optical axis OO'. For example, torque acting on the third sub-coil 333A and torque acting on the sixth sub-coil 333B have a same direction and an equal magnitude, and the third sub-coil group can drive the first circuit board 400 fixedly connected to the third sub-coil group to rotate.

In some examples, to control a magnitude of a driving force that can be generated by the image stabilization module 300 to drive the image sensor to translate or rotate, a controller may be used to control a magnitude of a current that passes through one or more sub-coils included in the coil 330, or a controller may be used to simultaneously power on one or more sub-coils in the coil 330, that is, one or more sub-coils in the coil 330 are used in combination.

For example, the coil 330 may include a plurality of sub-coils (for example, the first sub-coil 331A and the fourth sub-coil 331B described above) configured to generate a driving force in an X-axis direction in FIG. 9. When the image sensor needs to move by a relatively short distance in the X-axis direction, a current may be applied to a relatively small quantity of sub-coils for implementation. For example, a current is applied to only the first sub-coil 331A. Alternatively, a relatively small current may be applied to a same coil for implementation. Correspondingly, when the image sensor needs to move by a relatively long distance in the X-axis direction, a current may be applied to a relatively large quantity of sub-coils for implementation. For example, a current is simultaneously applied to the first sub-coil 331A and the fourth sub-coil 331B. Alternatively, a relatively large current may be applied to a same coil for implementation.

Similarly, for example, the coil 330 may include a plurality of sub-coils (for example, the second sub-coil 332A, the third sub-coil 333A, the fifth sub-coil 332B, and the sixth sub-coil 333B described above) configured to generate a driving force for driving the image sensor to rotate around the optical axis OO'. When the image sensor needs to rotate around the optical axis OO' by a relatively small angle, a current may be applied to a relatively small quantity of sub-coils for implementation. For example, a current is applied to only the second sub-coil 332A. Alternatively, a relatively small current may be applied to a same coil for implementation. When the image sensor needs to rotate around the optical axis OO' by a relatively large angle, a current may be applied to a relatively large quantity of sub-coils for implementation. For example, a current is simultaneously applied to the second sub-coil 332A, the third sub-coil 333A, the fifth sub-coil 332B, and the sixth sub-coil 333B. Alternatively, a relatively large current may be applied to a same coil for implementation.

In addition, when a plurality of sub-coils can generate a same type of driving forces, different quantities of turns may be set for different sub-coils (for example, the second sub-coil 332A and the third sub-coil 333A). In this way, for a same current, coils with different quantities of turns can generate different driving forces. When a relatively small driving force is required, a current may be applied to a coil with a relatively small quantity of turns, that is, a driving force is provided by the coil with a relatively small quantity of turns. When a relatively large driving force is required, a current may be applied to a coil with a relatively large quantity of turns, that is, a driving force is provided by the coil with a relatively large quantity of turns.

The foregoing merely provides examples of some manners of controlling an attribute of a coil, a magnitude of a current inside a coil, and use of a coil combination to control a magnitude and a direction of a driving force generated by the coil 330. It should be understood that the foregoing control manners should not be considered as a limitation on embodiments of this application.

In some examples, the coil 330 may include some of the plurality of sub-coils described above. For example, the coil 330 may include only the first sub-coil 331A and the second sub-coil 332A. In this case, the first sub-coil 331A is configured to generate a force in the positive direction of the X-axis or the negative direction of the X-axis in FIG. 9, the second sub-coil 332A is configured to generate a force in the positive direction of the Y-axis or the negative direction of the Y-axis in FIG. 9, and the second sub-coil 332A may be further configured to generate torque acting on the second sub-coil 332A by using the optical axis OO' as a rotation axis.

For another example, the coil 330 may include only the first sub-coil 331A, the second sub-coil 332A, and the third sub-coil 333A. In this case, the first sub-coil 331A is configured to generate a force in the positive direction of the X-axis or the negative direction of the X-axis in FIG. 9, the second sub-coil 332A and/or the third sub-coil 333A are/is configured to generate a force in the positive direction of the Y-axis or the negative direction of the Y-axis in FIG. 9, and the second sub-coil 332A and/or the third sub-coil 333A may be further configured to generate torque acting on the second sub-coil 332A or the third sub-coil 333A by using the optical axis OO' as a rotation axis.

The coil 330 may alternatively include another combination form of a plurality of sub-coils in the first sub-coil 331A to the sixth sub-coil 333B, and the plurality of sub-coils can meet the following: A force in an X-axis direction or a Y-axis direction in FIG. 9 can be generated, and torque acting on the second coil group or the third coil group by using the optical axis OO' as a rotation axis can be generated.

As described above, when the coil 330 is powered on, the coil 330 may generate a force or torque. In some examples, the coil 330 may be fixedly connected to a connection arm 420 of the first circuit board 400, so that the force or the torque can form a driving force that enables the first circuit board 400 to translate or rotate.

For example, the force generated by the coil 330 may act on the connection arm 420 of the first circuit board 400. After the force is applied, the connection arm 420 deforms and generates stress. The stress may act on a fastening outer frame 410 and a movable platform 430 that are fixedly connected to the connection arm 420. Because the fastening outer frame 410 is fixedly connected to the cover body 310 or the bottom plate 340, it is difficult for the fastening outer frame 410 to deform or move significantly. The movable platform 430 may correspondingly move under the action of the connection arm 420. Similarly, after the torque acts on the connection arm 420, the connection arm 420 may deform, to drive the movable platform 430 to rotate correspondingly.

In some examples, the coil 330 may be fixedly connected to the movable platform 430 of the first circuit board 400, so that the force or the torque can form a driving force that enables the movable platform 430 to translate or rotate.

For example, the force generated by the coil 330 may act on the movable platform 430 of the first circuit board 400, and the connection arm 420 fixedly connected to the movable platform 430 correspondingly deforms or moves, so that the movable platform 430 translates or rotates.

In summary, the coil 330 may include at least a coil #A and a coil #B. The coil #A may generate a first acting force with the first magnet 320 when being powered on, and the coil #B may generate a second acting force with the first magnet 320 when being powered on. In other words, when being powered on, the coil #A may be subject to a first acting force, and the coil #B may be subject to a second acting force. Herein, a direction of the first acting force and a direction of the second acting force may be perpendicular to each other, and at least one of the first acting force and the second acting force does not pass through the optical axis OO'. In this way, the coil 330 can drive the image sensor on the image stabilization assembly 300 to move and/or rotate.

It should be noted that, when the image stabilization assembly 300 does not need to implement an image stabilization function in the X-axis direction in FIG. 9, the coil 330 may not include a coil configured to generate an acting force in the X-axis direction in FIG. 9. Similarly, when the image stabilization assembly 300 does not need to implement an image stabilization function in the Y-axis direction in FIG. 9, the coil 330 may not include a coil configured to generate an acting force in the Y-axis direction in FIG. 9. When the image stabilization assembly 300 does not need to implement a rotation image stabilization function around the optical axis OO', the coil 330 may not include a coil configured to generate torque around the optical axis OO'.

FIG. 10 provides an example of a structure of a first circuit board 400. The first circuit board 400 may include a fastening outer frame 410, a connection arm 420, and a movable platform 430. The connection arm 420 is located between the fastening outer frame 410 and the movable platform 430, and the connection arm 420 is configured to connect the fastening outer frame 410 and the movable platform 430.

The first circuit board 400 may be fixedly connected to the coil 330. When an interaction force is generated between the coil 330 and the first magnet 320, the coil 330 may drive the first circuit board 400 to move or rotate, so that an image sensor mounted on the first circuit board 400 may move as the first circuit board 400 moves.

The coil 330 may be fixedly connected to the movable platform 430 of the first circuit board 400, and the coil 330 may directly drive the movable platform to move or rotate. The coil 330 may be alternatively fixedly connected to the connection arm 420 of the first circuit board 400, and drive the movable platform 430 to move or rotate through deformation and/or displacement of the connection arm 420.

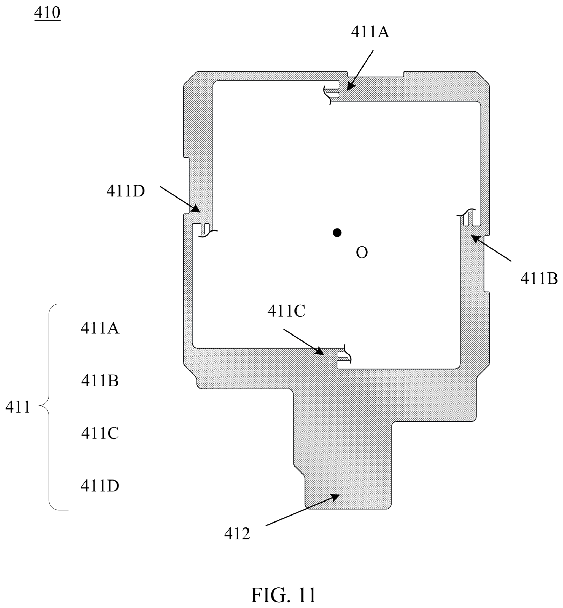

In some examples, with reference to FIG. 10 and FIG. 11, the fastening outer frame 410 is approximately in a shape of a square frame, and the fastening outer frame 410 is configured to fasten the first circuit board 400 in the accommodating space between the cover body 310 and the bottom plate 340. In some examples, the first circuit board 400 may be fixedly connected to the housing 310 by using the fastening outer frame 410.

In some examples, the fastening outer frame 410 may be provided with a connection portion 411, and the first connection portion 411 is connected to one end of the connection arm 420. As shown in FIG. 11, the fastening outer frame 410 may include four sub-connection portions (which are respectively a first sub-connection portion 411A, a second sub-connection portion 411B, a third sub-connection portion 411C, and a fourth sub-connection portion 411D). One or more connection points may be provided on each of the four sub-connection portions, and a connection point on each sub-connection portion may be used to connect to one end of the connection arm 420. The four sub-connection portions are centrosymmetric with respect to a rotation center of the first circuit board 400, and the connection points provided on the four sub-connection portions may also be centrosymmetric with respect to the rotation center O of the first circuit board 400.

In other words, the fastening outer frame 410 shown in FIG. 11 may include eight connection points. Every two of the eight connection points form one group, to form four groups of connection points. Positions of the four groups of connection points on the fastening outer frame 410 are centrosymmetric with respect to the rotation center O of the first circuit board 400. Each of the four groups of connection points is fixedly connected to one end of each of four groups of connection arms.

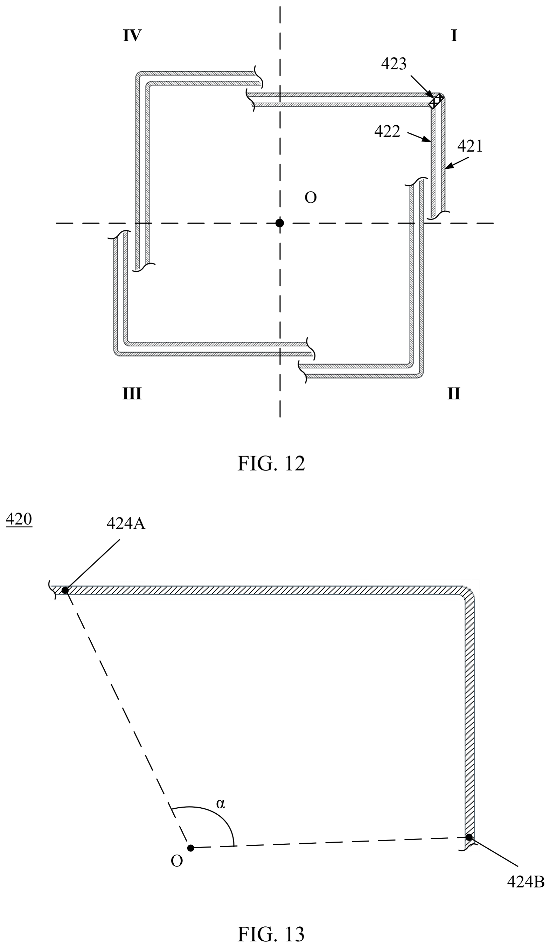

The connection arm 420 is configured to connect the fastening outer frame 410 and the movable platform 430. There may be a plurality of connection arms 420. In some examples, with reference to FIG. 10 and FIG. 12, the first circuit board 400 may include eight connection arms 420, and every two connection arms form one group, to form four groups of connection arms. The four groups of connection arms 420 are basically centrosymmetric with respect to the rotation center O of the first circuit board 400. One end of each of the eight connection arms 420 is connected to the fastening outer frame 410, and the other end is connected to the movable platform 430.

As shown in FIG. 10, a specific gap may be provided between the connection arm 420 and the fastening outer frame 410, between the connection arm 420 and the movable platform, and between two adjacent connection arms in a same group of connection arms. Therefore, when the connection arm 420 deforms or moves due to a force, the gap may provide deformation or displacement space for the connection arm 420, so that an acting force between the coil 330 and the first magnet 320 drives the movable platform 430 to move or rotate.

In some examples, the connection arm 420 may include a first group of connection arms, a second group of connection arms, a third group of connection arms, and a fourth group of connection arms. The first group of connection arms includes a first connection arm and a second connection arm, the second group of connection arms includes a third connection arm and a fourth connection arm, the third group of connection arms includes a fifth connection arm and a sixth connection arm, and the fourth group of connection arms includes a seventh connection arm and an eighth connection arm.

For example, as shown in FIG. 12, the first group of connection arms is located in an upper right corner, the second group of connection arms is located in a lower right corner, the third group of connection arms is located in a lower left corner, and the fourth group of connection arms is located in an upper left corner. The first group of connection arms includes a first connection arm 421 and a second connection arm 422. In some examples, a connection rod 423 may be disposed between the first connection arm 421 and the second connection arm 422. The connection rod 423 may be configured to implement relative fastening between the first connection arm 421 and the second connection arm 422. In other words, when the connection rod 423 is disposed, deformation of the first connection arm 421 and deformation of the second connection arm 422 may be relatively synchronous, or displacement of the first connection arm 421 and displacement of the second connection arm 422 may be relatively synchronous. This is more conducive to controlling the movable platform 430 by the first group of connection arms.

The connection rod 423 may have a same structure as the first connection arm 421 and/or the second connection arm 422. For example, when interconnection lines are disposed inside the first connection arm 421 and the second connection arm 422, an interconnection line may also be laid inside the connection rod 423, so that an electrical connection between the interconnection line inside the first connection arm 421 and the interconnection line inside the second connection arm 422 may be implemented through the interconnection line inside the connection rod 423. In this way, flexibility of arranging an interconnection line inside the first circuit board 400 can be provided. Related content of the interconnection line is described in detail below, and is not described herein.

One or more connection rods may be disposed between a plurality of connection arms in a same group of connection arms, and a position of the connection rod may be a position at which a force direction changes on the connection arm. For example, in FIG. 12, the first connection arm 421 includes a horizontal portion and a vertical portion that are connected to each other, a force direction of the connection arm is usually an axial direction of the arm, and a position at which the connection rod 423 is disposed on the first connection arm 421 may be a joint between the horizontal portion and the vertical portion. Alternatively, the connection rod may be disposed at another position on the connection arm. For example, the connection rod may be alternatively disposed at an end that is of the connection arm and that is close to the fastening outer frame 410, or the connection rod may be disposed at an end that is of the connection arm and that is close to the movable platform 430. This is not limited in this application. The connection rod may be perpendicular to the connection arm, to reduce a length of the connection rod. Alternatively, the connection rod may be disposed obliquely with the connection arm. This helps improve flexibility of disposing the connection rod.

The first circuit board 400 may alternatively include more or fewer connection arms 420. For example, the first circuit board 400 may include two or six connection arms 420. The plurality of connection arms 420 may be centrosymmetric with respect to the rotation center O of the first circuit board 400. A smaller quantity of connection arms may simplify a structure of the first circuit board 400, and improve production efficiency of the first circuit board 400. A larger quantity of connection arms help improve reliability and stability of driving the image sensor 220 by an acting force between the coil 330 and the first magnet 320.

In some examples, as shown in FIG. 13, the connection arm 420 includes a first connection end 424A and a second connection end 424B. The first connection end 424A is fixedly connected to the fastening outer frame 410, and the second connection end 424B is fixedly connected to the movable platform 430.

In some examples, an included angle between a connection line from the first connection end 424A of the connection arm 420 to the rotation center O of the first circuit board 400 and a connection line from the second connection end 424B to the rotation center O of the first circuit board 400 is greater than or equal to 90 degrees. In other words, an included angle between a connection line from the first connection end 424A of the connection arm 420 to the rotation center O of the first circuit board 400 and a connection line from the second connection end 424B to the rotation center O of the first circuit board 400 is not an acute angle. Herein, a direction in which the rotation center O points to the first connection end 424A or the second connection end 424B is used as a positive direction of two edges of the included angle.

The foregoing technical solution may also be understood as follows: A rotation center O of the plurality of connection arms 420 is used as a center of symmetry, and a plane including the plurality of connection arms 420 may be divided into a quadrant I, a quadrant II, a quadrant III, and a quadrant IV shown in FIG. 12 by using two straight lines that are perpendicular to each other and that pass through the rotation center. The connection arm 420 should pass through at least two of the four quadrants.

In some examples, the connection arm 420 may pass through two of the foregoing four quadrants. For example, the connection arm 420 may pass through the quadrant I and the quadrant II, or pass through the quadrant II and the quadrant III, or pass through the quadrant IV and the quadrant I.

In some examples, the connection arm 420 may pass through three of the foregoing four quadrants. For example, the connection arm 420 may pass through the quadrant I, the quadrant II, and the quadrant III, or pass through the quadrant II, the quadrant III, and the quadrant IV, or pass through the quadrant III, the quadrant IV, and the quadrant I.

In some examples, the connection arm 420 may pass through all of the foregoing four quadrants, that is, the connection arm 420 may pass through the quadrant I, the quadrant II, the quadrant III, and the quadrant IV shown in FIG. 12.

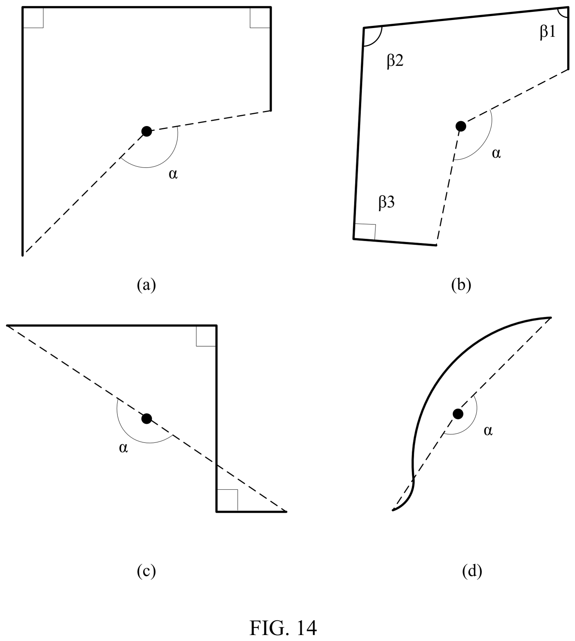

The connection arm 420 may include a plurality of sub-connection arms, and the plurality of sub-connection arms may form different shapes. In other words, the connection arm 420 may have a plurality of different shapes. For example, in FIG. 10 or FIG. 13, the connection arm 420 is approximately in a shape of "L". In some examples, the connection arm 420 may alternatively be approximately in a shape of "U", "Z", or the like. FIG. 14 provides examples of possible shapes of some connection arms 420. Each of these connection arms 420 includes a first end connected to the fastening outer frame 410 and a second end connected to the movable platform, and an included angle α formed between a connection line from the first end to the rotation center O and a connection line from the second end to the rotation center O is greater than or equal to 90°.

As shown in (a) in FIG. 14, the connection arm 420 may be considered as including three sub-connection arms, two adjacent sub-connection arms are perpendicular to each other, and the connection arm 420 is approximately in a shape of "U". An included angle formed by connection lines between two ends of the connection arm and the rotation center O is an obtuse angle, that is, an angle α in the figure is greater than 90°. The connection arm 420 shown in (a) in FIG. 14 may also be considered as passing through three of the four quadrants shown in FIG. 12.

As shown in (b) in FIG. 14, the connection arm 420 may be considered as including four sub-connection arms, and an included angle formed between two adjacent sub-connection arms 420 may be an acute angle, a right angle, or an obtuse angle. For example, in (b) in FIG. 14, β1<90°, β2>90°, and β3=90°. An included angle formed by connection lines between two ends of the connection arm and the rotation center O is an obtuse angle, that is, an angle α in the figure is greater than 90°. The connection arm 420 shown in (b) in FIG. 13 may also be considered as passing through all of the four quadrants shown in FIG. 12.

As shown in (c) in FIG. 14, the connection arm 420 may be considered as including three sub-connection arms, two adjacent sub-connection arms 420 are perpendicular to each other, and the connection arm 420 is approximately in a shape of "Z". An included angle formed by connection lines between two ends of the connection arm and the rotation center O is approximately a flat angle, that is, an angle α in the figure is equal to 180°. The connection arm 420 shown in (c) in FIG. 14 may also be considered as passing through three of the four quadrants shown in FIG. 12.

As shown in (d) in FIG. 14, the connection arm 420 may be a curved rod. An included angle formed by connection lines between two ends of the connection arm and the rotation center O is an obtuse angle, that is, an angle α in the figure is greater than 90°. The connection arm 420 shown in (d) in FIG. 14 may also be considered as passing through three of the four quadrants shown in FIG. 12.

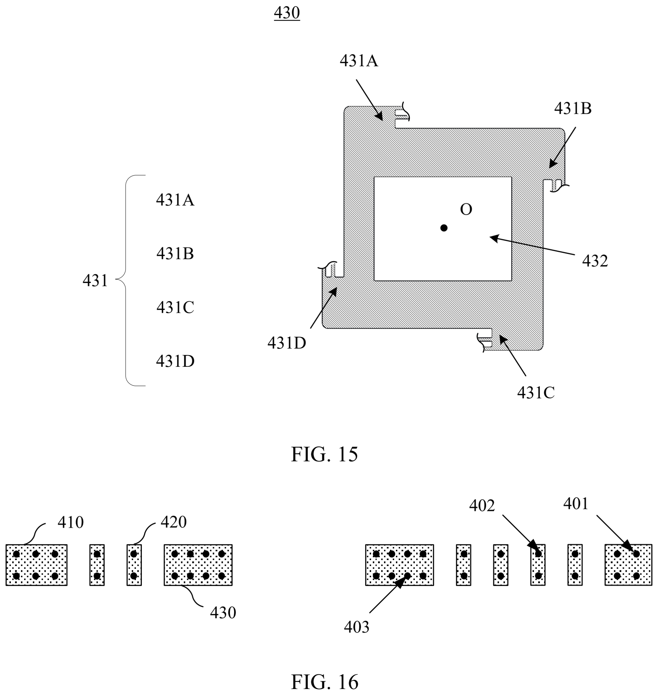

FIG. 15 provides an example of a movable platform 430. The movable platform 430 is approximately in a shape of a square frame, and an internal opening 432 of the movable platform 430 may be used to accommodate an image sensor.

The movable platform 430 may be provided with a second connection portion 431, and the second connection portion 431 is connected to the other end that is of the connection arm 420 and that is connected to the fastening outer frame 410. For example, in FIG. 15, the movable platform 430 may include four sub-connection portions (which are respectively a fifth sub-connection portion 431A, a sixth sub-connection portion 431B, a seventh sub-connection portion 431C, and an eighth sub-connection portion 431D). One or more connection points may be provided on each of the four sub-connection portions, and a connection point on each sub-connection portion may be used to connect to one end of the connection arm 420. The four connection portions are centrosymmetric with respect to the rotation center O of the first circuit board 400, and connection points provided on the four sub-connection portions may also be centrosymmetric with respect to the rotation center of the first circuit board 400.

In other words, each sub-connection portion on the movable platform 430 may be simultaneously connected to ends of a plurality of connection arms. For example, with reference to FIG. 10 and FIG. 15, one sub-connection portion of the movable platform 430 may be simultaneously connected to ends of two connection arms 420. In other words, the movable platform 430 shown in FIG. 15 may include eight connection points. Every two of the eight connection points form one group, to form four groups of connection points. Positions of the four groups of connection points on the movable platform 430 are centrosymmetric with respect to the rotation center O of the first circuit board 400. Each of the four groups of connection points is fixedly connected to one end that is of each of four groups of connection arms and that is away from the fastening outer frame 410.

Refer to FIG. 10 and FIG. 11. An interconnection line may be laid inside the first circuit board 400. In other words, an interconnection line may be laid inside each of the fastening outer frame 410, the connection arm 420, and the movable platform 430 of the first circuit board 400, and the interconnection line may be used to connect an electronic element inside the image stabilization assembly 300 and an external power supply.

In some examples, an extension portion 412 may be disposed on the fastening outer frame 410, and a power interface (for example, a B2B interface) is disposed on the extension portion 412. One end of the power interface may be connected to an external power supply, and the other end of the power interface may be connected to the interconnection line inside the first circuit board 400, to implement electrical conduction between the interconnection line inside the first circuit board 400 and the external power supply.

The interconnection line laid inside the fastening outer frame 410 may be referred to as a first interconnection line, and the power interface on the extension portion 412 may be connected to the first interconnection line. The interconnection line laid inside the connection arm 420 may be referred to as a second interconnection line, and the interconnection line laid inside the movable platform 430 may be referred to as a third interconnection line. One end of the second interconnection line may be connected (or electrically conductive) to an end that is of the first interconnection line and that is away from the power interface, and the other end of the second interconnection line may be connected (or electrically conductive) to the third interconnection line. The other end that is of the third interconnection line and that is connected to the second interconnection line may be connected to an electronic element such as the image sensor on the image stabilization assembly 300.

An electrical connection point (for example, a pin or a contact) may be provided on a side wall inside the movable platform 430, and the electrical connection point may be used to electrically connect to an electronic element such as the image sensor, so that an external power supply provided by the power interface of the first circuit board 400 can supply power to the image sensor. In some examples, the electrical connection point may be further used to supply power to the coil 330 and another electronic element (for example, a control chip or a Hall element) in the image stabilization assembly 300.

FIG. 16 is a diagram of an example of an AA cross section of the first circuit board 400 in FIG. 10. On the AA cross section, an entity part located on an outer side is a cross section of the fastening outer frame 410, a cross section of the connection arm 420 is spaced from the cross section of the fastening outer frame 410, and a cross section of the movable platform 430 is located in a middle region of the AA cross section. As shown in the figure, a first interconnection line 401 may be laid inside the fastening outer frame 410, a second interconnection line 402 may be laid inside the connection arm 420, and a third interconnection line 403 may be laid inside the movable platform 430.

There may be one or more first interconnection lines 401, one or more second interconnection lines 402, and one or more third interconnection lines 403. When there are a plurality of interconnection lines, the plurality of interconnection lines may be stacked, and a dielectric layer exists between the plurality of interconnection lines. The dielectric layer may be a poor conductor, or an electrical conductivity of the dielectric layer is less than a preset threshold. For example, the dielectric layer may be made of an organic material with a relatively low electrical conductivity, such as epoxy resin.

When a same connection portion of the fastening outer frame 410 and a same connection portion of the movable platform 430 are connected to each other by using a plurality of connection arms 420, and a connection rod is disposed between the plurality of connection arms 420, an interconnection line may also be laid inside the connection rod, and the interconnection line inside the connection rod may be configured to connect interconnection lines inside two connection arms 420. Alternatively, the connection rod may be made of a conductive material (for example, a metal material), or the connection rod may include a conductive portion, and the connection rod or the conductive portion of the connection rod may be configured to connect interconnection lines inside two connection arms. When the connection rod is made of a metal material, the connection rod may also be referred to as a metal flexural body.

In some examples, the first circuit board 400 may be prepared by stacking a plurality of conductive layers and a plurality of dielectric layers, press-fitting the layers into a plate shape, and then hollowing out a partial region of the plate structure (for example, a region between a plurality of connection arms 420, a spacing region between the connection arm 420 and the fastening outer frame 410, a spacing region between the connection arm 420 and the movable platform 430, and an opening region in the middle of the movable platform). The conductive layer is a structure including the first interconnection line 401, the second interconnection line 402, and the third interconnection line 403, and the dielectric layer is a structure that is disposed between conductive layers and has an insulation function.

In some examples, the conductive layer and the dielectric layer may be preprocessed into a shape of the first circuit board 400 shown in FIG. 10, and then the plurality of conductive layers and the plurality of dielectric layers are press-fitted, to form the first circuit board 400.

In some examples, the fastening outer frame 410, the connection arm 420, and the movable platform 430 of the first circuit board 400 may be separately prepared. The first circuit board 400 may be obtained by combining the fastening outer frame 410, the connection arm 420, and the movable platform 430 according to the shape shown in FIG. 10.

The foregoing merely provides examples of some methods for preparing the first circuit board 400, and these methods should not be construed as a limitation on the first circuit board 400 in this application.

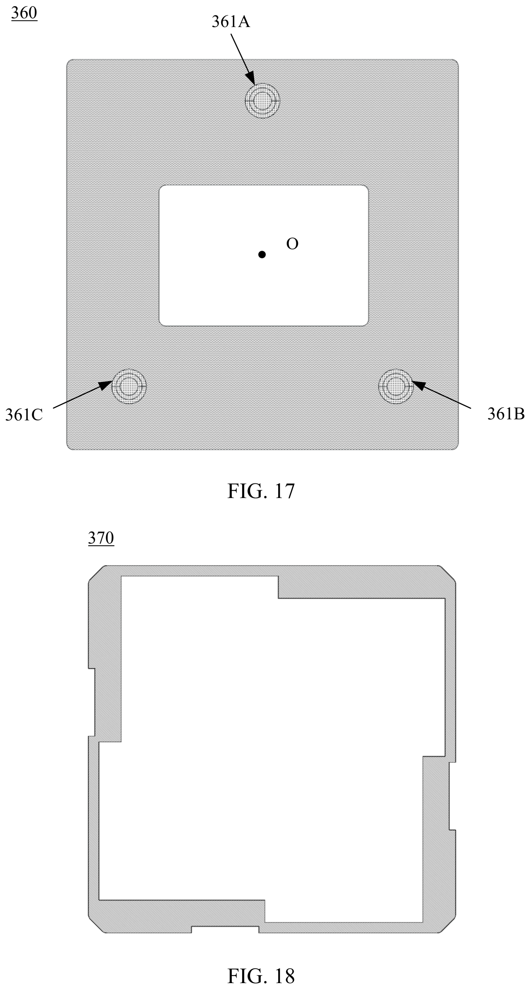

With reference to FIG. 4 and FIG. 17, the image stabilization assembly 300 may further include a support plate 360. The support plate 360 may be disposed between the first circuit board 400 and the bottom plate 340. The support plate 360 can reduce direct friction between the image sensor and the bottom plate 340, and reduce wear of the image sensor.

In some examples, an opening may be provided in a middle region of the support plate 360, and a position of the opening may correspond to a position of an opening in a middle region of the movable platform 430 on the first circuit board 400. When the image sensor is mounted at the opening position of the movable platform 430, the opening provided on the support plate 360 may be configured to accommodate a part of the image sensor, and the part may be referred to as a protruding part of the image sensor.

In some examples, a size and a shape of the opening of the support plate 360 may be determined with a shape and a size of the protruding part of the image sensor. For example, when the image sensor is mounted on the movable platform 430, the protruding part of the image sensor may be clamped in the opening of the support plate 360. When the image sensor translates or rotates, the image sensor may drive the support plate 360 to translate or rotate.

One or more pads 361 may be disposed on a surface that is of the support plate 360 and that faces the bottom plate 340, and a height of the pad 361 may be greater than a height by which the protruding part of the image sensor extends out of the opening of the support plate 360 when the protruding part is clamped on the support plate 360. In this way, when the image sensor drives the support plate 360 to move, the pad of the support plate 360 may be in contact with the bottom plate 340, thereby helping avoid direct contact between the image sensor and the bottom plate 340, and reduce a probability of wear and damage of the image sensor.

There may be a plurality of pads disposed on the support plate 360. For example, as shown in FIG. 17, the support plate 360 may include three pads: a first pad 361A, a second pad 361B, and a third pad 361C. Positions of the three pads may be centrosymmetric with respect to a rotation center O of the support plate 360. Heights of the three pads may be basically consistent, so that contact between the support plate 360 and the bottom plate 340 is relatively stable, and a probability of causing a shake in an optical axis direction is low.

The support plate 360 may be alternatively provided with another quantity of pads or a pad at another position. For example, there may be four pads, and the pads may be axisymmetrically distributed with respect to a symmetry axis of the support plate 360. FIG. 17 is merely an example for description, and should not be construed as a limitation on this application.

In some examples, a friction medium (or referred to as a lubricating material) such as a lubricating grease may be filled between the support plate 360 and the bottom plate 340. In some examples, a surface coating may be disposed on a surface that is of the support plate 360 and that faces the bottom plate 340. The surface coating may be configured to reduce a friction force between the support plate 360 and the bottom plate 340.

To improve stability of friction between the support plate 360 and the bottom plate 340, and reduce a probability that the support plate 360 shakes in a friction process, in some examples, the bottom plate 340 may be made of a magnetic material. The magnetic material may include one or more of an iron element, a cobalt element, or a nickel element. The image stabilization assembly 300 may further include a second magnet. The second magnet may be disposed right above the first circuit board 400. The second magnet and the bottom plate 340 may attract each other, so that the first circuit board 400 and the support plate 360 that are located between the second magnet and the bottom plate 340 can be press-fitted on the bottom plate 340. A position of the second magnet may correspond to a position of the pad 261 on the support plate 360. When an attractive force is generated between the second magnet and the bottom plate 340, the pad 361 that is in direct contact with the bottom plate 340 may be subject to pressure perpendicular to the bottom plate 340, so that the pad 361 is in contact with the bottom plate 340 more firmly, and a property and a magnitude of a friction force between the pad 361 and the bottom plate 340 are more stable and reliable.

In some examples, as shown in FIG. 4, the support plate 360 may be located inside the bottom plate 340. Because the support plate 360 has a specific thickness, and the support plate 360 is disposed between the bottom plate 340 and the first circuit board 400, a partial gap region exists between the first circuit board 400 and the bottom plate 340 on a periphery of the support plate 360. In some examples, as shown in FIG. 4, a support frame 370 shown in FIG. 18 may be sleeved on the periphery of the support plate 360, and a thickness of the support frame 370 may match a height of interval space between the first circuit board 400 and the bottom plate 340. Specifically, when the support plate 360 is not provided with the pad 361, a thickness of the support frame 370 may be close to or the same as a thickness of the support plate 360. When the support plate 360 is provided with the pad 361, a thickness of the support frame 370 may be close to or the same as a sum of a thickness of the support plate 360 and a height of the pad 361.

In some embodiments, the support frame 370 may be padded between the fastening outer frame 410 and the bottom plate 340 of the first circuit board 400. In other words, the support frame 370 may avoid the connection arm 420 of the first circuit board 400. Therefore, when the connection arm 420 deforms or moves due to a driving force, a friction force caused by contact between the connection arm 420 and another component does not adversely affect deformation or displacement of the connection arm 420.

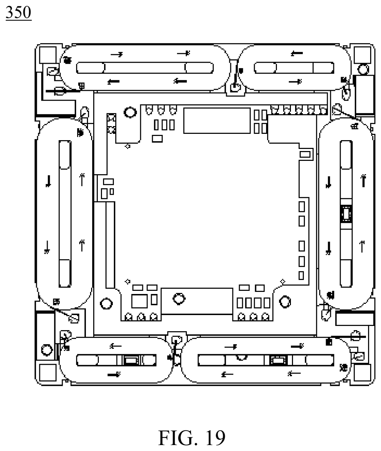

In some examples, with reference to FIG. 4 and FIG. 19, the image stabilization assembly 300 may further include a second circuit board 350, and the second circuit board 350 may be disposed right above the first circuit board 400. The second circuit board 350 may also be referred to as a fastening plate 350. The second circuit board 350 may be configured to fasten a component included in the image stabilization assembly 300. For example, the second circuit board 350 may be configured to fasten the coil 330 or the first magnet 320. In this case, the second circuit board 350 may be fixedly connected to the first circuit board 400.

In some examples, the second circuit board 350 may be fixedly connected to the movable platform 430 of the first circuit board 400. When a magnetic force is generated between the coil 330 and the first magnet 320, the second circuit board 350 may directly drive, under driving of the coil 330 or the first magnet 320, the movable platform 430 to move or rotate.

An interaction force between the coil 330 and the first magnet may directly drive the movable platform 430, so that conversion efficiency of converting mechanical energy into kinetic energy is higher, and energy utilization of the image stabilization assembly 300 is higher.

In some examples, the second circuit board 350 may be alternatively fixedly connected to the connection arm 420 of the first circuit board 400. When a magnetic force is generated between the coil 330 and the first magnet 320, the second circuit board 350 may drive, under driving of the coil 330 or the first magnet 320, the connection arm 420 to move or deform, so that the image sensor mounted on the first circuit board 400 translates or rotates.

A solution in which the second circuit board 350 is fixedly connected to the connection arm 420 may be considered as an alternative solution. When an area of the movable platform 430 is limited, or it is relatively difficult to fixedly connect the second circuit board 350 and the movable platform 430, it may be considered that the connection arm 420 is fixedly connected to the second circuit board 350. This helps improve internal space utilization of the image stabilization assembly 300 to some extent.

The second circuit board 350 may be fixedly connected to the first circuit board 400 in one or more manners such as welding and riveting. This is not limited in this application. The second circuit board 350 may be electrically connected to the first circuit board 400, so that the second circuit board 350 may obtain, by using the power interface of the first circuit board 400, power supplied by an external power supply.

The second circuit board 350 may be further configured to fasten the foregoing second magnet, and the second circuit board 350 may also be configured to mount one or more of electronic elements such as a Hall effect sensor and a controller.

According to the image stabilization assembly 300 provided in embodiments of this application, the interconnection line is laid inside the first circuit board 400, so that an electronic element (for example, the image sensor 220) inside the image stabilization assembly 300 can be electrically connected to an external power supply.

An interaction force between the first magnet 320 and the coil 330 inside the image stabilization assembly 300 may be used to drive the movable platform 430 on the first circuit board 400 to move or rotate. When the movable platform 430 moves or rotates, the image sensor 220 mounted on the movable platform 430 can correspondingly move or rotate. A sensor such as a Hall effect sensor in the image stabilization assembly 300 may determine target displacement and/or a target deflection angle of the image sensor 220. A controller in the image stabilization assembly 300 may control an interaction force between the coil 330 and the first magnet 320 by controlling a magnitude and a direction of a current in the coil 330, so that the image sensor 220 translates by the target displacement and/or rotates by the target deflection angle, thereby implementing image stabilization of the image sensor 220.

In addition, because the interconnection line used for power supply is laid inside the connection arm 420, when the connection arm 420 rotates, the interconnection line inside the connection arm 420 can be driven to rotate together. The first circuit board 400 is disposed inside the image stabilization assembly 300, so that good rotation image stabilization performance of the image stabilization assembly 300 can be ensured while power is supplied.

Reference to "an embodiment", "some embodiments", or the like described in this specification means that specific features, structures, or characteristics described with reference to the embodiment are included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. An image stabilization assembly of an image sensor, comprising a housing, a first magnet, a coil, and a first circuit board, wherein
the first magnet, the coil, and the first circuit board are accommodated in the housing;
the first circuit board comprises an outer frame, a connection arm, a movable platform, and an interconnection line;
the outer frame comprises a first interface, and the first interface is configured to connect to an external power supply of the image stabilization assembly;
a gap is provided between the movable platform and the outer frame, and the movable platform is configured to load the image sensor;
the connection arm is located in the gap, the connection arm connects the outer frame and the movable platform, there are a plurality of connection arms, and the plurality of connection arms are centrosymmetric with respect to a rotation center of the first circuit board;
the interconnection line is located inside the first circuit board, and the interconnection line connects the first interface and the image sensor; and
the first magnet or the coil is fixedly connected to the movable platform, and when a current is applied to the coil, the first magnet or the coil drives the movable platform to translate or rotate.

2. The image stabilization assembly according to claim 1, wherein a first end of the connection arm is connected to the outer frame, a second end of the connection arm is connected to the movable platform, and an included angle formed between a connection line from the first end to the rotation center and a connection line from the second end to the rotation center is greater than or equal to 90°.

3. The image stabilization assembly according to claim 1 or 2, wherein there are a plurality of connection arms, the plurality of connection arms comprise a first connection arm and a second connection arm, and both the first connection arm and the second connection arm are configured to connect a first connection portion of the outer frame and a second connection portion of the movable platform.

4. The image stabilization assembly according to claim 3, wherein a connection rod is connected between the first connection arm and the second connection arm.

5. The image stabilization assembly according to claim 4, wherein the connection rod comprises a conductive portion, and the conductive portion is used for conduction between a first interconnection line located inside the first connection arm and a second interconnection line located inside the second connection arm.

6. The image stabilization assembly according to any one of claims 1 to 5, wherein there are a plurality of interconnection lines, and the plurality of interconnection lines are located at different positions in a thickness direction of the first circuit board.

7. The image stabilization assembly according to any one of claims 1 to 6, wherein the connection arm comprises a plurality of sub-connection arms, and an included angle formed between two adjacent sub-connection arms in the plurality of sub-connection arms is equal to 90°.

8. The image stabilization assembly according to any one of claims 1 to 7, wherein the image stabilization assembly further comprises a bottom plate and a support plate; and
the bottom plate is located on a side that is of the first circuit board and that is away from a cover plate of the housing, the support plate is located between the first circuit board and the bottom plate, and the support plate is in contact with the bottom plate.

9. The image stabilization assembly according to claim 8, wherein the movable platform comprises a first opening, the support plate comprises a second opening, the first opening is in communication with the second opening, and the first opening and the second opening are used to accommodate the image sensor.

10. The image stabilization assembly according to claim 8 or 9, wherein a pad is disposed on a surface that is of the support plate and that faces the bottom plate, and the pad is in contact with the bottom plate.

11. The image stabilization assembly according to any one of claims 8 to 10, wherein the image stabilization assembly further comprises a second magnet, the bottom plate is made of a magnetic material, the second magnet is located above the movable platform, and the second magnet and the bottom plate attract each other.

12. The image stabilization assembly according to any one of claims 9 to 11, wherein the image stabilization assembly further comprises a support frame, the support frame is located between the bottom plate and the first circuit board, the support frame is located on an outer side of the support plate, and a thickness of the support frame is the same as a height of the support plate.

13. The image stabilization assembly according to claim 12, wherein the support frame avoids the connection arm.

14. The image stabilization assembly according to any one of claims 1 to 13, wherein the coil comprises a first sub-coil and a second sub-coil, the first sub-coil is configured to drive the movable platform to translate in a first direction, the second sub-coil is configured to drive the movable platform to translate in a second direction, and the first direction is perpendicular to the second direction.

15. The image stabilization assembly according to any one of claims 1 to 14, wherein the coil comprises a third sub-coil, and the third sub-coil is configured to drive the movable platform to rotate around the rotation center of the first circuit board.

16. The image stabilization assembly according to any one of claims 1 to 15, wherein the first magnet is a Halbach magnet.

17. The image stabilization assembly according to any one of claims 1 to 16, wherein the image stabilization assembly further comprises a fastening plate, the fastening plate is fixedly connected to the movable platform, and the first magnet or the coil is fastened to the fastening plate.

18. A circuit board, comprising an outer frame, a connection arm, a movable platform, and an interconnection line, wherein
a first interface is disposed on the outer frame, and the first interface is configured to connect to an external power supply of the image stabilization assembly;
a gap is provided between the movable platform and the outer frame, and the movable platform is configured to load the image sensor;
the connection arm is located in the gap, the connection arm connects the outer frame and the movable platform, there are a plurality of connection arms, and the plurality of connection arms are centrosymmetric with respect to a rotation center of the circuit board; and
the interconnection line is located inside the circuit board, and the interconnection line connects the first interface and the image sensor.

19. A camera module, comprising a lens, an image sensor, and the image stabilization assembly according to any one of claims 1 to 17, wherein the image sensor is mounted in a middle region of the image stabilization assembly, the lens is relatively fastened to the image stabilization assembly, and an imaging light ray is incident to the image sensor through the lens.

20. An electronic device, comprising a mainboard and the camera module according to claim 19, wherein the camera module is electrically connected to the mainboard.
